# EUROPEAN PATENT APPLICATION

(11) **EP 3 546 648 A1**
(43) Date of publication of application: **02.10.2019**
(21) Application number: 19162120.0
(22) Date of filing: 12.03.2019
(51) Int. Cl.: E01B 7/24, E01B 19/00

(54) **CONTROLLER FOR SNOW REMOVAL SYSTEM, EJECTION CONTROLLER, AND HEATING CONTROLLER**

(30) Priority: 27.03.2018 JP 2018060560
(71) Applicant: Nabtesco Corporation, Tokyo 102-0093 (JP)
(72) Inventor: KIGAMI, Shogo, Kobe-shi, Hyogo 651-2271 (JP)
(74) Representative: Grünecker Patent- und Rechtsanwälte PartG mbB

(57) **Abstract**

A controller (4) for a snow removal system (1), wherein the snow removal system (1) is provided with a fluid ejection device (2; 102) and a rail heating device (3; 103), being configured to control one of the ejection device (2; 102) and the heating device (3; 103) in accordance with control of the other one of the ejection device (2; 102) and the heating device (3; 103).

## Description

The present invention relates to a controller for a snow removal system, an ejection controller, and a heating controller.

Tracks may include a track junction including stock rails and tongue rails. In a snowy region, an ejection device may be installed on the track junction and eject air to remove an object such as snow from between the stock rails and the tongue rails (for example, refer to Japanese Laid-Open Patent Publication No. 6-240605).

The ejection device includes a nozzle having an opening toward the distal end of the tongue rail. The ejection device ejects air compressed by a compressor from the nozzle to blow snow away from between the stock rails and the tongue rails.

A heating device may be installed on the track junction on which the ejection device is installed. In such a track junction, the ejection device and the heating device operate separately from each other. In a snow removal system that includes the ejection device and the heating device, there is a demand for an effective operation of the snow removal system.

Accordingly, it is an objective of the present invention to provide a controller for a snow removal system that effectively operates an ejection device and a heating device. It is also an objective of the present invention to provide an ejection controller, which is a controller for the ejection device, and a heating controller, which is a controller for the heating device.

To achieve the above objective and in accordance with one aspect of the present invention, a controller for a snow removal system is provided that includes an ejection device that ejects a fluid to remove snow from a track junction and a heating device that heats a rail of the track junction. The controller controls one of the ejection device and the heating device in accordance with control of the other one of the ejection device and the heating device.

With the above configuration, the control of the ejection device and the control of the heating device are combined and performed. This reduces inefficiency that occurs when the ejection device and the heating device are separately operated. Thus, the ejection device and the heating device effectively operate.

In the controller described above, the snow removal system may include a detection unit that detects whether or not snow is present in the track junction. Preferably, when the detection unit detects the snow is present, the controller operates the ejection device and the heating device.

With the above configuration, when snow is present in the track junction, both the ejection device and the heating device are operated so that the snow is quickly removed.

Preferably, the controller described above controls the ejection device and the heating device based on a temperature of the rail.

With the above configuration, in addition to the heating device, the ejection device is controlled based on the temperature of the rail of the track junction. This reduces unnecessary operations of the heating device as compared to when only the heating device is controlled based on the temperature of the rail.

Preferably, the controller described above controls at least one of an ejection pressure, an ejection frequency, and an ejection time of the fluid ejected from the ejection device based on a temperature of the rail heated by the heating device.

With the above configuration, at least one of the ejection pressure, the ejection frequency, and the ejection time of the fluid is controlled. Thus, the fluid is ejected based on the temperature of the heated rail.

To achieve the above objective and in accordance with another aspect of the present invention, an ejection controller is provided. In addition to controlling an ejection device that ejects a fluid to remove snow from a track junction, the ejection controller controls a heating device that heats a rail of the track junction.

With the above configuration, the control of the ejection device and the control of the heating device are combined and performed. This reduces inefficiency that occurs when the ejection device and the heating device are separately operated. Thus, the ejection device and the heating device effectively operate.

To achieve the above objective and in accordance with another aspect of the present invention, a heating controller is provided. In addition to controlling a heating device that heats a rail of a track junction, the heating controller controls an ejection device that ejects a fluid to remove snow from the track junction.

With the above configuration, the control of the ejection device and the control of the heating device are combined and performed. This reduces inefficiency that occurs when the ejection device and the heating device are separately operated. Thus, the ejection device and the heating device effectively operate.

According to the present invention, the ejection device and the heating device effectively operate.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram showing a snow removal system of a first embodiment;
Fig. 2 is a schematic diagram showing a track junction on which the snow removal system of the first embodiment is installed;
Fig. 3 is a table showing operation modes of an ejection device of the snow removal system of the first embodiment;
Fig. 4 is a flowchart showing a snow removal process performed by the snow removal system of the first embodiment;
Fig. 5 is a flowchart showing a non-switching process performed by the snow removal system of the first embodiment;
Fig. 6 is a flowchart showing a snow removal process performed by a snow removal system of a second embodiment; and
Fig. 7 is a schematic block diagram showing a snow removal system of a third embodiment.

### First Embodiment

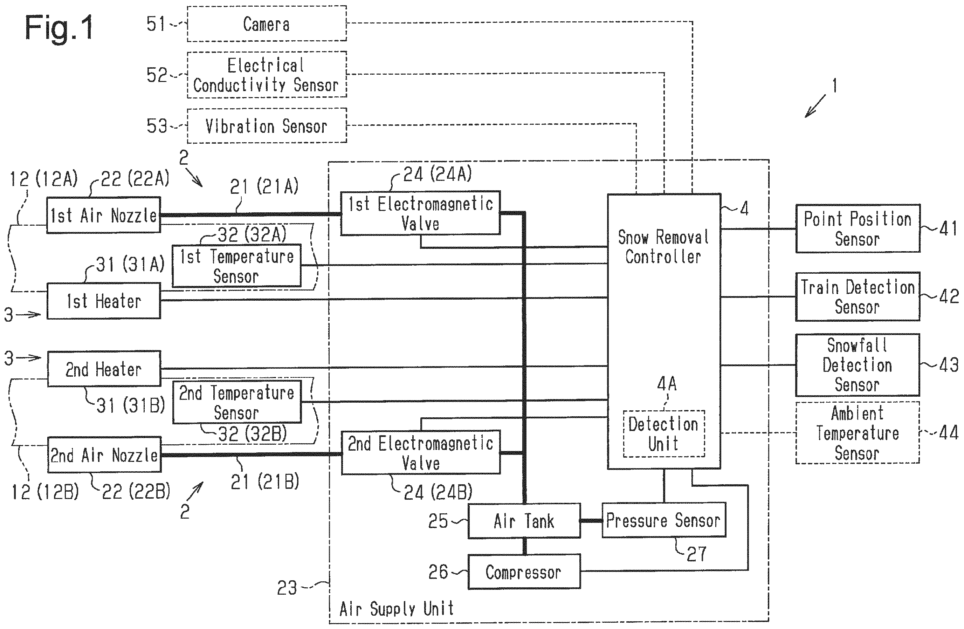

A controller for a snow removal system of a first embodiment will now be described with reference to Figs. 1 to 5.

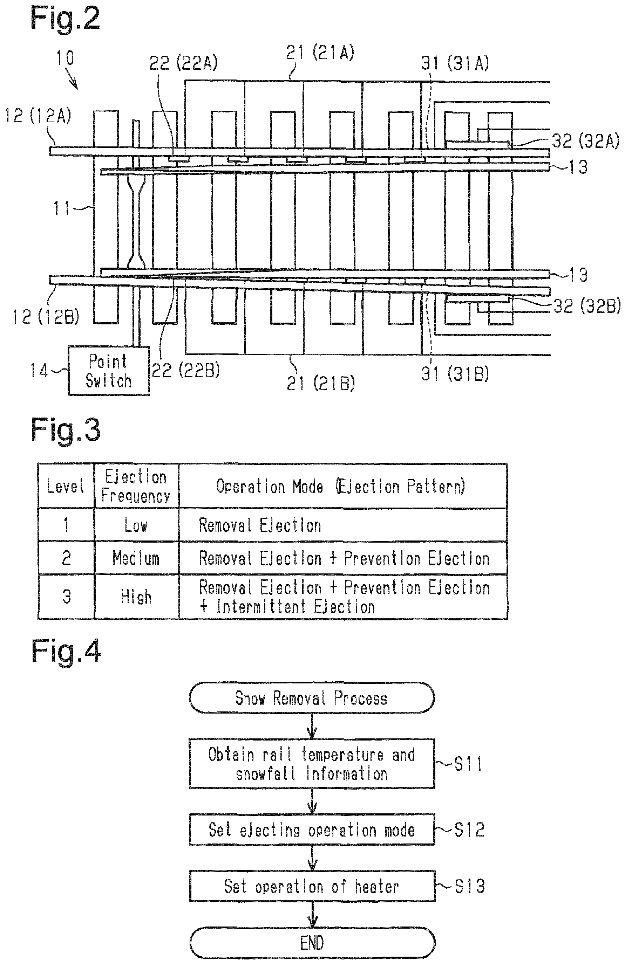

In a snowy region, as shown in Fig. 1, a snow removal system 1 is installed on a track junction 10 (refer to Fig. 2). The snow removal system 1 includes an ejection device 2 that ejects a fluid to remove snow from the track junction 10 and a heating device 3 that heats rails of the track junction 10. In this description, snow includes, in addition to snow, ice formed from snow that has melted and frozen.

As shown in Fig. 2, the track junction 10 has the functions of dividing a track into tracks and switching between the tracks. The track junction 10 includes two stock rails 12 fixed to railway sleepers 11, two tongue rails 13 moved relative to the stock rails 12, and a point switch 14 that moves the tongue rails 13. When the point switch 14 moves the tongue rails 13, the track junction 10 switches the track. The point switch 14 is of an electric type and moves the tongue rails 13 with a motor. In the track junction 10, when a train travels on the track junction 10 shifting between the stock rails 12 and the tongue rails 13, vibration is generated and causes snow to fall from under a floor of the train. The snow collected under the floor of the train includes hard snow. When an object such as snow is present between the stock rails 12 and the tongue rails 13, the track junction 10 may not be able to switch the track. This is referred to as a non-switching.

The ejection device 2 is pneumatic and ejects compressed air as a fluid to blow snow away from between the stock rails 12 and the tongue rails 13 of the track junction 10. The ejection device 2 includes pipes 21 arranged on a side surface of each stock rail 12 and an air nozzle 22 arranged on the distal end of each pipe 21. The air nozzle 22 has an opening arranged between the stock rail 12 and the tongue rail 13 when the stock rail 12 is in close contact with the tongue rail 13. The opening of the air nozzles 22 is directed toward the distal end of the tongue rail 13 to blow snow toward the distal end of the tongue rail 13. A plurality of sets of the pipes 21 and the air nozzles 22 is arranged on the stock rails 12.

The heating device 3 includes heaters 31 of an electric heating type. The heaters 31 are arranged on a side surface of each stock rail 12 and heat the stock rails 12 to melt snow. The tongue rails 13 may be heated in addition to or instead of the stock rails 12. Additionally, a panel heater may be arranged between the railway sleepers 11 to heat the stock rails 12 and/or the tongue rails 13. The heaters 31 are not limited to the electric heating type and may be of a gas type.

As shown in Fig. 1, in the ejection device 2, the two stock rails 12 include a normal side stock rail 12Aand a reverse side stock rail 12B. A first pipe 21A is arranged on a side surface of the normal side stock rail 12A, and a second pipe 21B is arranged on a side surface of the reverse side stock rail 12B. A first air nozzle 22A is arranged on the distal end of the first pipe 21A. A first electromagnetic valve 24A is arranged on the first pipe 21A to control ejection of air from the first air nozzle 22A. A second air nozzle 22B is arranged on the distal end of the second pipe 21B. A second electromagnetic valve 24B is arranged on the second pipe 21B to control ejection of air from the second air nozzle 22B. The first electromagnetic valve 24A and the second electromagnetic valve 24B are connected to an air tank 25 that stores compressed air. The air tank 25 is connected with a pipe that is divided and connected to the first electromagnetic valve 24A and the second electromagnetic valve 24B. The air tank 25 includes a pressure sensor 27 that detects the pressure of the air tank 25. When the pressure of the air tank 25 is less than or equal to a threshold value, a compressor 26 operates and supplies compressed air to the air tank 25. More specifically, the compressed air is supplied from the compressor 26 and stored in the air tank 25. The air is ejected from the first air nozzle 22A and the second air nozzle 22B in accordance with activation and deactivation of the first electromagnetic valve 24A and the second electromagnetic valve 24B connected to the air tank 25.

The heating device 3 includes a first heater 31A installed on the side surface of the normal side stock rail 12A of the two stock rails 12 in the extension direction thereof and a second heater 31B installed on the side surface of the reverse side stock rail 12B in the extension direction thereof. The heating device 3 further includes a first temperature sensor 32A arranged on the normal side stock rail 12A to detect the temperature of the normal side stock rail 12A and a second temperature sensor 32B arranged on the reverse side stock rail 12B to detect the temperature of the reverse side stock rail 12B. The first temperature sensor 32A and the second temperature sensor 32B output temperature signals including the detected temperature information. As long as the first temperature sensor 32A and the second temperature sensor 32B are components of the snow removal system 1, the first temperature sensor 32A and the second temperature sensor 32B do not have to be components of the heating device 3 and may be components of the ejection device 2.

The snow removal system 1 includes a snow removal controller 4 that controls both the ejection device 2 and the heating device 3. The heating device 3 does not include a controller and is controlled by the snow removal controller 4. The snow removal controller 4 controls air ejection performed by the ejection device 2 by controlling activation and deactivation of the first electromagnetic valve 24A and the second electromagnetic valve 24B of the ejection device 2. The snow removal controller 4 also controls heating performed by the heating device 3 by controlling activation and deactivation of the first heater 31A and the second heater 31B of the heating device 3.

The snow removal controller 4 includes a programmable logic controller (PLC), or a sequence control device, and operates in accordance with a dedicated program called a ladder program. The PLC includes a central processing unit (CPU) and a memory. The snow removal controller 4 is connected to input devices such as a pressure sensor 27, a first temperature sensor 32A, a second temperature sensor 32B, a point position sensor 41, a train detection sensor 42, and a snowfall detection sensor 43. The snow removal controller 4 is also connected to output devices such as the first electromagnetic valve 24A, the second electromagnetic valve 24B, a compressor 26, the first heater 31A, and the second heater 31B. The snow removal controller 4 controls the output devices as controlled devices through the ladder program.

The point position sensor 41 detects positions of the tongue rails 13 between the normal and reverse side stock rails 12 based on a current value of the motor of the point switch 14 and outputs a position signal including the detected position information. The snow removal controller 4 determines whether or not the track is switched based on the position signal received from the point position sensor 41. For example, when snow is present between the stock rails 12 and the tongue rails 13 and the tongue rails 13 cannot move, the point position sensor 41 outputs a position signal including position information indicating so. When non-switching occurs in the track junction 10, the switching of the track is retried or information indicating non-switching is transmitted to, for example, an operation command site.

The train detection sensor 42 includes, for example, an ultrasonic sensor and outputs a train passing detection signal when detecting that a train passes.

When the snowfall detection sensor 43detects that snow is collected on a detection portion, the snowfall detection sensor 43 outputs a snowfall signal. The snowfall signal output from the snowfall detection sensor 43 may include an amount of snowfall detected in accordance with the amount of moisture of snow collected on the detection portion. The snowfall detection sensor 43 is not limited to a moisture detection type and may be of an infrared ray type that detects snowfall by detecting an infrared ray reflected by snow.

As shown in Fig. 3, the snow removal controller 4 performs "removal ejection", "prevention ejection", and "intermittent ejection" with the ejection device 2. The removal ejection refers to an air ejection performed by the ejection device 2 to remove snow from the track junction 10 when the track junction 10 is in a non-switching state. When the track junction 10 is in the non-switching state and the switching of the track is retried, retrying ejection is performed in which air is ejected whenever the retrying is performed. The prevention ejection refers to an air ejection performed by the ejection device 2 whenever a train passes to prevent occurrence of the non-switching caused by snow falling from the traveling train on the track junction 10. The intermittent ejection refers to an air ejection performed by the ejection device 2 at a fixed time interval during snowfall to avoid snow accumulation.

The snow removal controller 4 sets an operation mode of the ejection device 2 in accordance with the temperature of the rail and snowfall information. More specifically, one operation mode is selected from a plurality of operation modes (ejection patterns) including appropriate combinations of "the removal ejection", "the prevention ejection", and "the intermittent ejection" and executed. In the operation mode of a first level, the snow removal controller 4 performs only the removal ejection so that the frequency of air ejection performed by the ejection device 2 is decreased. When the temperature of the stock rails 12 is relatively high and there is no snowfall, the snow removal controller 4 sets the operation mode of the first level. In the operation mode of a second level, the snow removal controller 4 performs the removal ejection and the prevention ejection so that the frequency of air ejection performed by the ejection device 2 is a medium level. When the temperature of the stock rails 12 is relatively low or there is snowfall, the snow removal controller 4 sets the operation mode of the second level. In the operation mode of a third level, the snow removal controller 4 performs the removal ejection, the prevention ejection, and the intermittent ejection so that the frequency of air ejection performed by the ejection device 2 is increased. When the temperature of the stock rails 12 is relatively low and there is snowfall, the snow removal controller 4 sets the operation mode of the third level. The air ejection pattern in the operation mode of each level may be changed in any manner, for example, in accordance with the installation environment of the snow removal system 1 and the train condition.

As shown in Fig. 2, the snow removal controller 4 does not simultaneously eject air from the first air nozzle 22A and the second air nozzle 22B but ejects air from one of the first air nozzle 22A and the second air nozzle 22B. The snow removal controller 4 performs activation control to open the first electromagnetic valve 24A or the second electromagnetic valve 24B so that the compressed air is supplied to the pipes 21 located on the side surface of each stock rail 12 located further from the tongue rail 13. As described above, when air is ejected from only one of the first air nozzle 22A and the second air nozzle 22B, a necessary air pressure or a necessary amount of air is limited. If the first air nozzle 22A and the second air nozzle 22B simultaneously need to eject air, the air pressure of the air tank 25 or the amount of air in the air tank 25 may be set to the necessary pressure or the necessary amount. When the pressure value of the air tank 25 obtained from the pressure sensor 27 is less than or equal to a threshold value, the snow removal controller 4 operates the compressor 26 to supply compressed air to the air tank 25.

As shown in Fig. 1, the snow removal controller 4 controls one of the ejection device 2 and the heating device 3 in accordance with control of the other one of the ejection device 2 and the heating device 3. In the first embodiment, the snow removal controller 4 determines the operation state of the heating device 3 in accordance with the operation state of the ejection device 2. More specifically, the snow removal controller 4 sets the operation mode of the ejection device 2 and then sets the operation of the heaters 31 of the heating device 3. The snow removal controller 4 controls the ejection device 2 and the heating device 3 based on the temperature of the stock rails 12 of the track junction 10. More specifically, when the temperature of the stock rails 12 is relatively high and is, for example, greater than or equal to 5°C and there is snowfall, the snow may easily melt. When the temperature of the stock rails 12 is relatively low and is, for example, less than 5°C and there is snowfall, the snow may not melt and may accumulate. Thus, the snow removal controller 4 controls the ejection device 2 and the heating device 3 based on the temperature of the stock rails 12 so that the ejection device 2 and the heating device 3 are effectively operated while limiting occurrence of the non-switching in the track junction 10.

In components of the snow removal system 1, the first electromagnetic valve 24A, the second electromagnetic valve 24B, the air tank 25, the compressor 26, the pressure sensor 27, and the snow removal controller 4 configure an air supply unit 23. When connected to a device installed on the track junction 10, the air supply unit 23 serves as the snow removal system 1. Examples of devices installed on the track junction 10 include the first pipe 21A, the first air nozzle 22A, the second pipe 21B, the second air nozzle 22B, the first heater 31A, the second heater 31B, the first temperature sensor 32A, the second temperature sensor 32B, the point position sensor 41, the train detection sensor 42, and the snowfall detection sensor 43. Additionally, when connected to the first heater 31A, the second heater 31B, the first temperature sensor 32A, and the second temperature sensor 32B, which are components of the heating device 3, the air supply unit 23 serves as the heating device 3 in addition to the ejection device 2. This allows the snow removal controller 4 of the air supply unit 23 to control the ejection device 2 and the heating device 3.

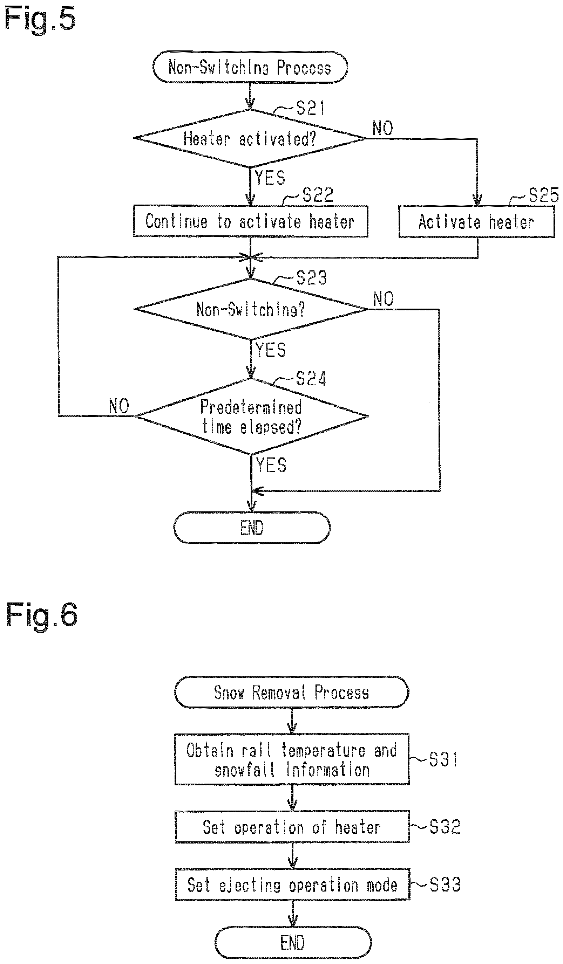

The operation of the snow removal system 1 configured as described above will now be described with reference to Figs. 4 and 5.

As shown in Fig. 4, the snow removal controller 4 performs a snow removal process described below.

The snow removal controller 4 obtains the temperature of the rails of the track junction 10 and snowfall information (step S11). More specifically, the snow removal controller 4 obtains the temperature of the normal side stock rail 12A from a temperature signal output from the first temperature sensor 32A and the temperature of the reverse side stock rail 12B from a temperature signal output from the second temperature sensor 32B. The snow removal controller 4 also obtains the snowfall information from the snowfall signal output from the snowfall detection sensor 43.

Subsequently, the snow removal controller 4 sets the ejecting operation mode (step S12). More specifically, the snow removal controller 4 selects one from the operation modes of the ejection device 2 based on the temperature of the stock rails 12 and the snowfall information. More specifically, when the temperature of the stock rails 12 is, for example, greater than or equal to 5°C and there is no snowfall, the snow removal controller 4 sets the operation mode of a first level. In the operation mode of the first level, the snow removal controller 4 performs only the removal ejection. When the temperature of the stock rails 12 is less than 5°C or there is snowfall, the snow removal controller 4 sets the operation mode of a second level. In the operation mode of the second level, the snow removal controller 4 performs the removal ejection and the prevention ejection. When the temperature of the stock rails 12 is less than 5°C and there is snowfall, the snow removal controller 4 sets the operation mode of a third level. In the operation mode of the third level, the snow removal controller 4 performs the removal ejection, the prevention ejection, and the intermittent ejection.

Subsequently, the snow removal controller 4 sets the operation of the heaters (step S13). More specifically, the snow removal controller 4 sets the operation of the first heater 31A and the second heater 31B taking into consideration the operation state of the ejection device 2. Thus, the heaters 31 are operated at lower temperatures than those operated in a typical manner. For example, in a typical configuration in which an ejection device and a heating device are separately operated, activation control is performed on heaters of the heating device at less than 5°C, and deactivation control is performed on the heaters at 15°C or greater. In the present embodiment, activation control may be set to be performed on the first heater 31A and the second heater 31B of the heating device 3 of the snow removal system 1 at less than 3°C, and deactivation control may be set to be performed at 10°C or greater. This is because the heating device 3 heats the stock rails 12 so that snow is easy to separate and blown away by air of the ejection device 2. This eliminates the need for entirely melting snow present in the track junction 10.

As shown in Fig. 5, when the non-switching occurs in the track junction 10, the snow removal controller 4 performs a non-switching process in the snow removal process. When the non-switching occurs, the snow removal controller 4 causes the ejection device 2 to perform the removal ejection whenever the point switch 14 operates to switch the track.

The snow removal controller 4 determines whether or not the heaters are activated (step S21). More specifically, when occurrence of non-switching is caused by presence of snow on the track junction 10, the non-switching may be eliminated by heating the stock rails 12. Thus, the snow removal controller 4 determines whether or not activation control is performed on the first heater 31A and the second heater 31B. When the snow removal controller 4 determines that deactivation control is performed on the first heater 31A and the second heater 31B (step S21: NO), the heaters are activated (step S25). More specifically, the snow removal controller 4 forcibly performs activation control on the first heater 31A and the second heater 31B to heat the stock rails 12 regardless of the operation mode of the ejection device 2.

When the snow removal controller 4 determines that activation control is performed on the first heater 31A and the second heater 31B (step S21: YES), the snow removal controller 4 continues to perform the activation control on the first heater 31A and the second heater 31B (step S22).

Subsequently, the snow removal controller 4 determines whether or not the track junction 10 is in a non-switching state (step S23). More specifically, the snow removal controller 4 determines whether or not the non-switching state is eliminated from the track junction 10. When the snow removal controller 4 determines that the track junction 10 is not in the non-switching state (step S23: NO), the non-switching is eliminated. Thus, the non-switching process is ended.

When the snow removal controller 4 determines that the track junction 10 is in the non-switching state (step S23: YES), the non-switching is not eliminated. Thus, the snow removal controller 4 determines whether or not a predetermined amount of time has elapsed from when the non-switching process was started (step S24). A certain amount of time is needed to warm the stock rails 12 with the first heater 31A and the second heater 31B. Thus, when the snow removal controller 4 determines that the predetermined amount of time has not elapsed (step S24: NO), the snow removal controller 4 proceeds to step S23 to wait until the predetermined amount of time elapses.

When the snow removal controller 4 determines that the predetermined amount of time has elapsed (step S24: YES), the non-switching cannot be eliminated by the heating of the stock rails 12 for the predetermined amount of time. Thus, the non-switching process is ended. The snow removal controller 4 informs, for example, the operation command site that the non-switching cannot be eliminated.

As described above, the snow removal system 1 heats the stock rails 12 with the heating device 3 so that snow is easy to separate and blows the snow with the air of the ejection device 2. This reduces energy consumption (e.g., power consumption) of the ejection device 2 and the heating device 3 in the snow removal system 1. Thus, the snow removal system 1 effectively operates.

As described above, the present embodiment has the advantages described below.
(1) The control of the ejection device 2 and the control of the heating device 3 are combined and performed by the snow removal controller 4 of the snow removal system 1. This reduces inefficiency that occurs when the ejection device and the heating device are separately operated. Thus, the ejection device 2 and the heating device 3 effectively operate.
(2) In addition to the heating device 3, the ejection device 2 is controlled based on the temperature of the stock rails 12 of the track junction 10. This reduces unnecessary operations of the heating device 3 as compared to when only the heating device 3 is controlled based on the temperature of the stock rails 12.
(3) The ejection device 2 is controlled in combination with the heating device 3. This reduces the necessary ejection pressure. More specifically, the necessary performance of the compressor 26 may be reduced. Additionally, when the ejection pressure is reduced, noise generated by ejection sound is reduced.
(4) The heating device 3 is controlled in combination with the ejection device 2. This reduces the necessary amount of heat. More specifically, the necessary performance of the heaters 31 may be lowered. Additionally, when the operation time of the heaters 31 is reduced, the running cost is reduced.

### Second Embodiment

A controller for a snow removal system of a second embodiment will now be described with reference to Fig. 6. The snow removal controller 4 of the snow removal system 1 of the second embodiment differs from that of the first embodiment in the process for controlling the ejection device 2 and the heating device 3. The description hereafter will focus on the differences from the first embodiment.

As shown in Fig. 1, the snow removal controller 4 controls one of the ejection device 2 and the heating device 3 in accordance with control of the other one of the ejection device 2 and the heating device 3. In the second embodiment, the snow removal controller 4 determines the operation state of the ejection device 2 in accordance with the operation state of the heating device 3. More specifically, the snow removal controller 4 sets the operation of the heaters 31 of the heating device 3 and then sets the operation mode of the ejection device 2. Additionally, the snow removal controller 4 controls the ejection device 2 and the heating device 3 based on the temperature of the stock rails 12 of the track junction 10.

The operation of the snow removal system 1 will now be described with reference to Fig. 6.

As shown in Fig. 6, the snow removal controller 4 performs a snow removal process described below.

In the same manner as in step S11 of the first embodiment, the snow removal controller 4 obtains the temperature of the rails of the track junction 10 and the snowfall information (step S31).

Subsequently, the snow removal controller 4 sets the operation of the heaters (step S32). More specifically, the snow removal controller 4 sets the operation of the first heater 31A and the second heater 31B based on the obtained temperature of the stock rails 12 and the obtained snowfall information. More specifically, when the temperature of the stock rails 12 is, for example, greater than or equal to 5°C, the snow removal controller 4 performs deactivation control on the first heater 31A and the second heater 31B. When the temperature of the stock rails 12 is, for example, less than 5°C or there is snowfall, activation control is performed on the first heater 31A and the second heater 31B. After activation control is performed on the first heater 31A and the second heater 31B, when the temperature of the stock rails 12 becomes, for example, greater than or equal to 10°C, the snow removal controller 4 performs deactivation control on the first heater 31A and the second heater 31B.

Subsequently, the snow removal controller 4 sets the ejecting operation mode (step S33). More specifically, the snow removal controller 4 selects one from the operation modes of the ejection device 2 taking into consideration the operation state of the heating device 3. More specifically, when the temperature of the stock rails 12 is, for example, greater than or equal to 5°C and the heaters 31 are not activated, the snow removal controller 4 sets the operation mode of a first level. In the operation mode of the first level, the snow removal controller 4 performs only the removal ejection. When the temperature of the stock rails 12 is less than 5°C and the heaters 31 are not activated, the snow removal controller 4 sets the operation mode of a second level. In the operation mode of the second level, the snow removal controller 4 performs the removal ejection and the prevention ejection. When the temperature of the stock rails 12 is less than 3°C and the heaters 31 are activated, the snow removal controller 4 sets the operation mode of a third level. In the operation mode of the third level, the snow removal controller 4 performs the removal ejection, the prevention ejection, and the intermittent ejection. Thus, when there is snowfall, the heaters 31 melt the snow. This reduces the operation of the ejection device 2. This is because the heating device 3 heats the stock rails 12 so that snow is easy to separate and blown away by air of the ejection device 2. This eliminates the need for entirely melting snow present in the track junction 10.

When non-switching occurs in the track junction 10, the snow removal controller 4 performs the non-switching process in the snow removal process in the same manner as the first embodiment.

As described above, the present embodiment has the following advantage in addition to advantages (1), (3), and (4) of the first embodiment.
(5) The operation of the heaters 31 of the heating device 3 is set, and then the operation mode of the ejection device 2 is set. Thus, the operation of the ejection device 2 is reduced taking into consideration the heating device 3 melting snow.

### Third Embodiment

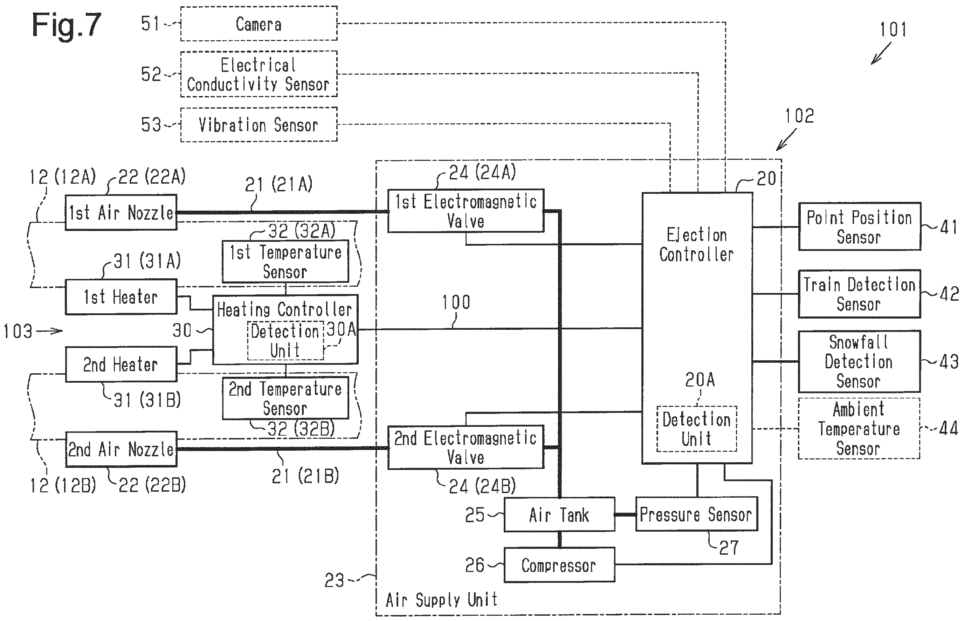

A controller for a snow removal system of a third embodiment will now be described with reference to Fig. 7. The snow removal system of the third embodiment differs from that of the first embodiment in that each of the ejection device and the heating device includes a controller. The description hereafter will focus on the differences from the first embodiment.

As shown in Fig. 7, a snow removal system 101 includes an ejection device 102 and a heating device 103.

The ejection device 102 includes an ejection controller 20 that controls air ejection performed by the ejection device 102 in addition to the components of the ejection device 2 in the first embodiment. The ejection controller 20 includes a programmable logic controller (PLC), or a sequence control device, and operates in accordance with a dedicated program called a ladder program. The ejection controller 20 is connected to input devices such as the pressure sensor 27, the point position sensor 41, the train detection sensor 42, and the snowfall detection sensor 43. The ejection controller 20 is also connected to output devices such as the first electromagnetic valve 24A, the second electromagnetic valve 24B, and the compressor 26. The ejection controller 20 controls the output devices as controlled devices through the ladder program. The ejection controller 20 controls air ejection performed by the ejection device 102 by controlling activation and deactivation of the first electromagnetic valve 24A and the second electromagnetic valve 24B.

The heating device 103 includes a heating controller 30 that controls heating of the heating device 103 in addition to the components of the heating device 3 in the first embodiment. The heating controller 30 includes a PLC, or a sequence control device, and operates in accordance with a dedicated program called a ladder program. The heating controller 30 is connected to input devices such as the first temperature sensor 32A and the second temperature sensor 32B. The heating controller 30 is also connected to output devices such as the first heater 31A and the second heater 31B. The heating controller 30 controls the output devices as controlled devices through the ladder program. The heating controller 30 controls heating performed by the heating device 103 by controlling activation and deactivation of the first heater 31A and the second heater 31B.

The ejection controller 20 and the heating controller 30 are connected to perform communication with each other by a connection line 100, which corresponds to a communication portion. The ejection controller 20 obtains the temperature of the rails from the heating controller 30 through the connection line 100. The heating controller 30 obtains snowfall information and non-switching information from the ejection controller 20 through the connection line 100. The ejection controller 20 and the heating controller 30 may each include a communication portion allowing wireless communication instead of using the connection line 100.

The ejection controller 20 determines the operation sate of the ejection device 102 in accordance with the operation state of the heating device 103. The heating controller 30 determines the operation state of the heating device 103 in accordance with the operation state of the ejection device 102.

The ejection controller 20 and the heating controller 30 determine which one of the ejection device 102 and the heating device 103 is given priority. Then, in accordance with the operation state of the one of the devices given priority, the ejection controller 20 and the heating controller 30 operate the other device.

When priority is given to the operation of the ejection device 102, the ejection controller 20 sets the operation mode of the ejection device 102 based on the temperature of the rails and the snowfall information in the same manner as the first embodiment. The heating controller 30 sets the operation of the heaters 31 of the heating device 103 in accordance with the operation mode of the ejection device 102. The ejection controller 20 may set the operation mode of the ejection device 102 based on only the snowfall information. The heating controller 30 may set the operation of the heaters 31 in accordance with the temperature of the rails in addition to the operation mode of the ejection device 102.

When priority is given to the operation of the heating device 103, the heating controller 30 sets the operation of the heaters 31 of the heating device 103 based on the temperature of the rails and the snowfall information in the same manner as the second embodiment. The ejection controller 20 sets the operation mode of the ejection device 102 in accordance with the operation of the heaters 31 of the heating device 103. The heating controller 30 may set the operation of the heaters 31 based on only the temperature of the rails. The ejection controller 20 may set the operation mode of the ejection device 102 in accordance with the snowfall information in addition to the operation of the heaters 31 of the heating device 103.

The heating controller 30 forcibly performs activation control on the heaters 31 to heat the stock rails 12 regardless of the operation mode of the ejection device 102.

As described above, the ejection device 102 may be installed on the track junction 10 on which the heating device 103 is installed. In such a case, when the ejection device 102 and the heating device 103 are combined and controlled, energy consumption (e.g., power consumption) may be reduced as compared to when the ejection device 102 and the heating device 103 separately operate. Thus, the snow removal system 101 effectively operates.

As described above, the present embodiment has the following advantage in addition to advantages (1) to (4) of the first embodiment and advantage (5) of the second embodiment.
(6) In the snow removal system 101 that includes the ejection device 102 including the ejection controller 20 and the heating device 103 including the heating controller 30, the control of the ejection device 102 is combined with the control of the heating device 103. Thus, the snow removal system 101 effectively operates.

The embodiments described above may be modified as follows.

In the first and second embodiments, when there is snowfall in the track junction 10, the snow removal controller 4 may operate the ejection device 2 and the heating device 3. For example, as indicated by broken lines in Fig. 1, the snow removal controller 4 includes a detection unit 4A that detects whether or not snow is present in the track junction 10. The detection unit 4A recognizes the condition of the track junction 10 from at least one of a camera 51 connected to the snow removal controller 4, an electrical conductivity sensor 52, and a vibration sensor 53, and detects whether or not snow is present in the track junction 10. In regard to the camera 51, the camera 51 captures an image of the track junction 10, the snow removal controller 4 obtains the image captured by the camera 51, and the detection unit 4A detects whether or not snow is present in the track junction 10 from the image. In regard to the electrical conductivity sensor 52, the electrical conductivity sensor 52 measures the electrical conductivity of at least one of the stock rails 12 and the tongue rails 13 of the track junction 10, and the detection unit 4A detects whether or not snow is present in the track junction 10 based on changes in the electrical conductivity of the rails caused by presence of snow. In regard to the vibration sensor 53, the vibration sensor 53 measures vibration of at least one of the stock rails 12 and the tongue rails 13 of the track junction 10, and the detection unit 4A detects whether or not snow is present in the track junction 10 based on changes in vibration characteristics of the rails caused by presence of an object such as snow.

The detection unit 4A may recognize the condition of the track junction 10 from at least one of the camera 51, the electrical conductivity sensor 52, and the vibration sensor 53, and detect whether or not the track junction 10 is in a non-switching state. When the track junction 10 is in a non-switching state, the detection unit 4A may operate at least one of the ejection device 2 and the heating device 3.

In the third embodiment, when snow is present in the track junction 10, at least one of the ejection controller 20 and the heating controller 30 may operate at least one of the ejection device 102 and the heating device 103. For example, as indicated by broken lines in Fig. 7, the ejection controller 20 includes a detection unit 20A that detects whether or not snow is present in the track junction 10. The heating controller 30 includes a detection unit 30A that detects whether or not snow is present in the track junction 10. Only one of the detection unit 20A and the detection unit 30A may be used. That is, one of the detection unit 20A and the detection unit 30A may be omitted. The detection unit 20A and the detection unit 30A recognize the condition of the track junction 10 from at least one of the camera 51, the electrical conductivity sensor 52, and the vibration sensor 53 of the ejection controller 20 and detect whether or not snow is present in the track junction 10. The heating controller 30 obtains information from the ejection controller 20 through the connection line 100 from the camera 51, the electrical conductivity sensor 52, and the vibration sensor 53. When snow is present in the track junction 10, at least one of the ejection device 102 and the heating device 103 is operated so that snow is quickly removed.

In the embodiments described above, the operation mode is set based on the temperature of the rails and the snowfall information. Instead, the operation mode may be set based on only the temperature of the rails without using the snowfall information. For example, the snow removal controller 4 sets the operation mode of the first level when the temperature of the stock rails 12 is greater than or equal to 5°C, the operation mode of the second level when the temperature of the stock rails 12 is less than 5°C and greater than or equal to 3°C, and the operation mode of the third level when the temperature of the stock rails 12 is less than 3°C.

In the embodiments described above, control is performed based on the temperature of the stock rails 12. Instead, control may be performed based on the temperature of the tongue rails 13. Further, control may be performed based on both the temperature of the stock rails 12 and the temperature of the tongue rails 13. For example, the temperature of the stock rails 12 may be compared with the temperature of the tongue rails 13, and control may be performed based on the lower one of the temperatures.

In the embodiments described above, as shown in Figs. 1 and 7, the snow removal systems 1 and 101 may include an ambient temperature sensor 44 that detects the ambient temperature around the track junction 10 and outputs an ambient temperature signal including ambient temperature information. The snow removal controller 4 and the heating controller 30 may perform activation and deactivation control on the first heater 31A and the second heater 31B based on the ambient temperature instead of the temperature of the rails. In this configuration, when snow is present in the track junction 10, the snow is quickly removed by operating at least one of the ejection devices 2 and 102 and the heating devices 3 and 103.

In the first and second embodiments, the snow removal controller 4 is a PLC. However, the snow removal controller 4 is not limited to PLCs and may be devices that control controlled devices without using the ladder program.

In the embodiments described above, at least one of the ejection pressure, the ejection frequency, and the ejection time of air ejected from the ejection devices 2 and 102 may be controlled based on the temperature of the rails of the track junction 10. Increases in the ejection pressure of a fluid increase an amount or distance of snow that is blown. Increases in the ejection frequency increase an amount or distance of snow that is blown. Increases in the ejection time increase an amount or distance of snow that is blown.

In the embodiments, the ejection devices 2 and 102 remove snow by simply blowing snow away with ejected air. A heating means may be provided to heat air before the ejection so that hot air is ejected. Alternatively, a pipe unit including the nozzle described above may be used as a heating device so that when the track junction 10 is in the non-switching state, heat is applied between the stock rails 12 and the tongue rails 13.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

The present examples and embodiments are to be considered as illustrative and not restrictive, and the invention is not to be limited to the details given herein, but may be modified within the scope and equivalence of the appended claims.

## Claims

1. A controller (4) for a snow removal system (1; 101), wherein
the snow removal system (1; 101) includes an ejection device (2; 102) that ejects a fluid to remove snow from a track junction (10) and a heating device (3; 103) that heats a rail (12) of the track junction (10), and
the controller (4) controls one of the ejection device (2; 102) and the heating device (3; 103) in accordance with control of the other one of the ejection device (2; 102) and the heating device (3; 103).

2. The controller (4) according to claim 1, wherein
the snow removal system (1; 101) includes a detection unit (4A; 20A; 30A) that detects whether or not snow is present in the track junction (10), and
when the detection unit (4A; 20A; 30A) detects the snow is present, the controller (4) operates the ejection device (2; 102) and the heating device (3; 103).

3. The controller (4) according to claim 1 or 2, wherein the controller (4) controls the ejection device (2; 102) and the heating device (3; 103) based on a temperature of the rail (12).

4. The controller (4) according to claim 1 or 2, wherein the controller (4) controls at least one of an ejection pressure, an ejection frequency, and an ejection time of the fluid ejected from the ejection device (2; 102) based on a temperature of the rail (12) heated by the heating device (3; 103).

5. An ejection controller (20) controlling an ejection device (2; 102) that ejects a fluid to remove snow from a track junction (10),
wherein the ejection controller (20) further controls a heating device (3; 103) that heats a rail of the track junction (10).

6. A heating controller (30) controlling a heating device (3; 103) that heats a rail of a track junction (10),
wherein the heating controller (30) further controls an ejection device (2; 102) that ejects a fluid to remove snow from the track junction (10).
